Europäisches Patentamt

European Patent Office

Office européen des brevets

(11) Publication number: **0 017 398**
**B1**

# EUROPEAN PATENT SPECIFICATION

(45) Date of publication of patent specification: **22.12.82**

(21) Application number: **80300873.9**

(22) Date of filing: **20.03.80**

(51) Int. Cl.³: **C 04 B 41/20, C 04 B 7/00, E 21 C 37/00, E 21 B 43/25**

(54) Demolition agent, its preparation and its use.

(30) Priority: **20.03.79 JP 31763/79**

(43) Date of publication of application:
**15.10.80 Bulletin 80/21**

(45) Publication of the grant of the patent:
**22.12.82 Bulletin 82/51**

(84) Designated Contracting States:
**CH DE FR GB IT SE**

(56) References cited:
**CHEMICAL ABSTRACTS, vol. 90, 1979, page
245, no. 91472c Columbus, Ohio, U.S.A.
CHEMICAL ABSTRACTS, vol. 91, 1979, page
267, no. 215634z Columbus, Ohio, U.S.A. JUN.
ISOGAI et al.: "Expansion due to hydration of
hardened cement paste with calcium
sulfoaluminate admixture"
CHEMICAL ABSTRACTS, vol. 91, 1979 page
268, no. 95729k Columbus, Ohio, U.S.A.**

(73) Proprietor: **ONODA CEMENT COMPANY, LTD.
6276, Oaza Onoda
Onoda-shi Yamaguchi (JP)**

(72) Inventor: **Toshio, Kawano
5-6-4 Aobadai
Ichihara-shi Chiba (JP)**
Inventor: **Ishii, Shiro
2-19-65 Ikego
Zushi-shi Kanagawa (JP)**

(74) Representative: **Ruffles, Graham Keith et al,
MARKS & CLERK 57-60 Lincoln's Inn Fields
London WC2A 3LS (GB)**

Courier Press, Leamington Spa, England.

# Demolition agent, its preparation and its use

This invention relates to a demolition agent for demolishing objects which incorporate brittle materials such as concrete, rock, brick, etc.

Hitherto, many demolition agents such as explosives, expansion gases and expansion materials have been proposed for use on brittle materials such as concrete, rocks and bricks etc. Of these agents, an explosive is preferable because of its strong breakage effect per unit time, but it has disadvantages that it may cause pollution and other unwanted effects, such as noise, flying rock, vibration and dust at the time of an explosion, and its use may be accompanied with danger. In order to eliminate such disadvantages, a method has been proposed wherein a slurry of an expansion material is loaded into a hole drilled in the brittle material to be demolished, and demolition achieved by means of an expansive stress of the slurry. By using this method there is no noise (except for drilling), no vibration, and less danger. It is considered that quick-lime can be used as a demolition agent because of its great expansive stress. It has, however, the disadvantage that since it has a very high hydration speed and may expand by hydration immediately after being mixed with water, its fluidity is reduced rapidly making it difficult for pouring into the hole. Even though it can be poured, its expansive stress may escape in the direction of the hole opening, so that its pressure against the side wall of the hole may become very low. In practice, it therefore cannot be used as a demolition agent. In order to overcome this disadvantage, a method may be considered in which a slurry of quick-lime is poured into a hole and thereupon a binding cap is fixed at the opening of the hole to confine the expansive stress, but this is not a preferable method because of its troublesome operation. Another method can also be considered in which silicofluoride or the like can be added to quick-lime to restrict the hydration speed of the quick-lime. However, it can not be expected to obtain a high expansive stress, since quick-lime has no self hydraulic property and the expansive stress of quick-lime may escape to the direction of the opening of the hole. Further, since the reactivity of quick-lime may be different depending on its degree of calcination during its preparation, it is very difficult to control its hydration speed.

In the manufacture of expanding cement, it is known from USSR Patent Specification No 624,893 (see Chemical Abstracts, vol 90, 1979, 91472c) that the addition of 1—10% CaO to clinker containing 13—20% calcium silicates, 3—6% calcium aluminoferrites, 50—70 calcium sulphoferrites and 5—13% calcium sulphate increases the strength of the cement and the degree of its expansion.

An object of this invention is to offer a hydraulic demolition agent which hydrates at a relatively low speed and has a relatively large expansive coefficient and expansive stress.

We have now found a pulverized or otherwise comminuted material which hydrates at a relatively low speed and has a large expansive coefficient and expansive stress.

In accordance with the present invention there is provided a comminuted calcined material comprising the following main components 24 to 65% by weight of $3CaO.SiO_2$ crystals, 30 to 60% by weight of CaO crystalline particles and 5 to 17% by weight of $CaSO_4$, more than 50% by weight of the CaO crystalline particles being included in the $3CaO.SiO_2$ crystals.

The material can be obtained by a process provided by the invention which comprises mixing calcareous material, siliceous material and gypsum in the molar ratio of $CaO/SiO_2$ of from 5.0—14.4 and for $CaSO_4/SiO_2$ of from 0.13 to 1.19, and roasting the mixture under an oxidizing atmosphere at 1350 to 1550°C.

The preferred demolition agent comprises 35—42% by weight of $3CaO.SiO_2$ crystals, 45—50% by weight of CaO crystalline particles and 9—10% by weight of $CaSO_4$, from 58—63% by weight of said CaO crystalline particles being included in the $3CaO.SiO_2$.

The numerical limits specified for the percentages of the components are based on the following considerations:

In the case that the amount of $3CaO.SiO_2$ crystals in the material is less than 24%, when the slurry obtained by mixing the demolition agent with water is poured into a hole drilled in a brittle material, it will normally expand by hydration of coexisting CaO crystalline particles and spout from the pouring part similar to the case of quick-lime alone, and its expansive stress will become inadequate for proper demolition. In the case that the amount of $3CaO.SiO_2$ crystals is more than 65% the amounts of CaO crystalline particles and $CaSO_4$ component are necessarily lowered so that appreciable expansive stress may not be generated. In the case that the amount of CaO crystalline particles is less than 30%, the amount of $3CaO.SiO_2$ crystals becomes too high, so that the above mentioned high expansive stress cannot be readily obtained. Furthermore, in the case that the amount of CaO crystalline particles is more than 60%, although the expansive stress is high, the amounts of hydraulic components, $3CaO.SiO_2$ and $CaSO_4$ become low, and less than 50% of CaO crystalline particles are included in $3CaO.SiO_2$ crystals. Thus, when a slurry obtained by mixing the comminuted calcined material with water is poured into a hole drilled in a brittle material, the slurry may expand and spout from the pouring part, and high expansive stress will not be obtained. Moreover, in the case that the amount of $CaSO_4$ is less than 5% it is difficult to calcine the mixture, $3CaO.SiO_2$ crystals and CaO crystals cannot grow well, and as a result insufficient CaO crystalline particles may be included in the large $3CaO.SiO_2$ crystals. Thus, speed of expansion becomes too quick, the expansive stress becomes low, and the generation of expansive stress becomes little. Furthermore, the case that the amount of $CaSO_4$ is more than 17% is not preferable, since the mixture will usually melt during the calcining.

The demolition agent preferably has 1500 to 4000 $cm^2/g$ of specific surface area (Blaine). When the specific surface area is less than 1500 $cm^2/g$, generation of expansive stress is slow, and when the specific surface area is more than 4000 $cm^2/g$, much water is required to obtain necessary fluidity for pouring into a hole of brittle material, so that expansive stress becomes lower, and therefore it is not preferable as a demolition agent. Suitable specific surface areas are obtained by pulverization or other comminution procedures.

Moreover, by including with the demolition agent one or, if compatible, more than one water reduction agents, the expansive stress of the demolition agent may be improved greatly. Suitable water reduction agents for use with cement are available on the free market and examples include those of the lignin types, sulphonates of higher alcohols, oxyorganic acid types, alkylarylsulphonates and their high condensates, polyoxyethylene alkyl ethers, polyol composite types, water-soluble melamine resin types, beta-naphthalene sulphonic acid-formalin condensate types, or mixes of them. When such a water reduction agent is to be mixed with the demolition agent, a powdery or oily one may be mixed during comminution, or it may be mixed after the comminution. Furthermore, one in aqueous solution may be mixed with water during the step of preparing the slurry of the demolition agent. The amount of water reduction agent added is suitably about 0.5 to 2%.

According to this invention, and for use of the demolition agent, from 0.3 to 0.45 parts of water in the case of not employing a water reduction agent, or 0.25 to 0.3 parts of water in the case of employing a water reduction agent, may be added to 1 part by weight of demolition agent, and the ingredients mixed to prepare a slurry. The slurry is then poured into a hole drilled in the brittle material. The appearance of expansive stress is different depending on the composition of the demolition agent and the diameter of hole drilled in the brittle materials. In the cases of the hole diameters being 36, 42 and 52 mm, we find that expansive stress of more than 320, 380 and 400 $kg/cm^2$ respec-

tively can be generated. (1 $kg/cm^2 = 0,0981$ $N/mm^2$).

The demolition agent of this invention is usually used where the atmospheric temperature is higher than 5°C.

Although the reason is not clear why the demolition agent of this invention can generate such a high expansive stress, it is considered that since the demolition agent mainly consists of CaO crystalline particles covered by $3CaO.SiO_2$ crystals, $3CaO.SiO_2$ crystals will be hydrated quickly, and then CaO crystalline particles will be hydrated gradually. As the result a strong friction will occur between hardened slurry and the wall surface of the hole, and the expansive stress will act almost all against the wall surface of the hole. Furthermore, when a water reduction agent is mixed into the demolition agent, it is considered that the amount of water required to prepare a slurry with a necessary fluidity for pouring may be decreased, and the real amount of the demolition agent in unit volume of the slurry may be increased; additionally initial hydration of the $3CaO.SiO_2$ crystals will be accelerated, and then CaO crystalline particles will expand by hydration, and as a result, the greater expansive stress will be generated.

The present invention is illustrated by the following non-limiting examples. In the examples, reference is made to the accompanying drawings in which:

Figure 1 is equipment used for measuring expansive stress generated by slurries of demolition agents, and

Figures 2 to 5 are graphs of results obtained with equipment as shown in Figure 1.

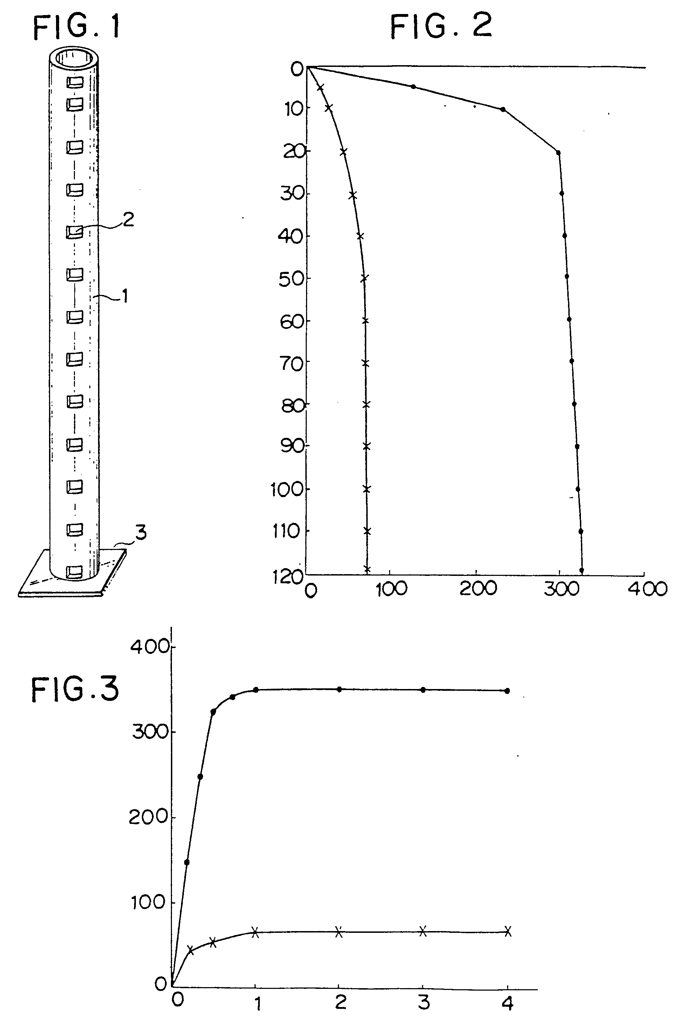

The equipment of Figure 1 used for the measurements comprises a carbon steel pipe 1 originally intended for ordinary piping and arranged vertically. The pipe 1 has an internal diameter of 36 mm and a length of 120 cm. Two-foil strain gages 2 were adhered against each other on the pipe surface at intervals of 10 cm along the length of the steel pipe 1, each strain gage consisting of two-foil gages with a length of 5 mm set in an L-shape, in order that one foil gage is horizontal and the other one is vertical. The bottom of the steel pipe is sealed to steel plate 3 by welding. Measurements were taken after filling the pipe with a test slurry.

As will be mentioned in Example 1, Figure 2 is a graph showing the relationship at 20°C between the height (cm) of the expansive stress measuring pipe (longitudinal axis) and the expansive stress ($kg/cm^2$) after one day (lateral axis), when certain demolition agents are filled in the expansive stress measuring device of Figure 1, while Figure 3 is a graph showing the corresponding relationship at 20°C of the expansive stress ($kg/cm^2$) at the middle part of the measuring pipe height (longitudinal axis) and the age (days) of the slurries used to generate the Figure 2 (lateral axis).

In Figure 2 and 3,

—●— denotes a demolition agent of this invention,

—x— denotes "Denka CSA", a known cement expansive agent.

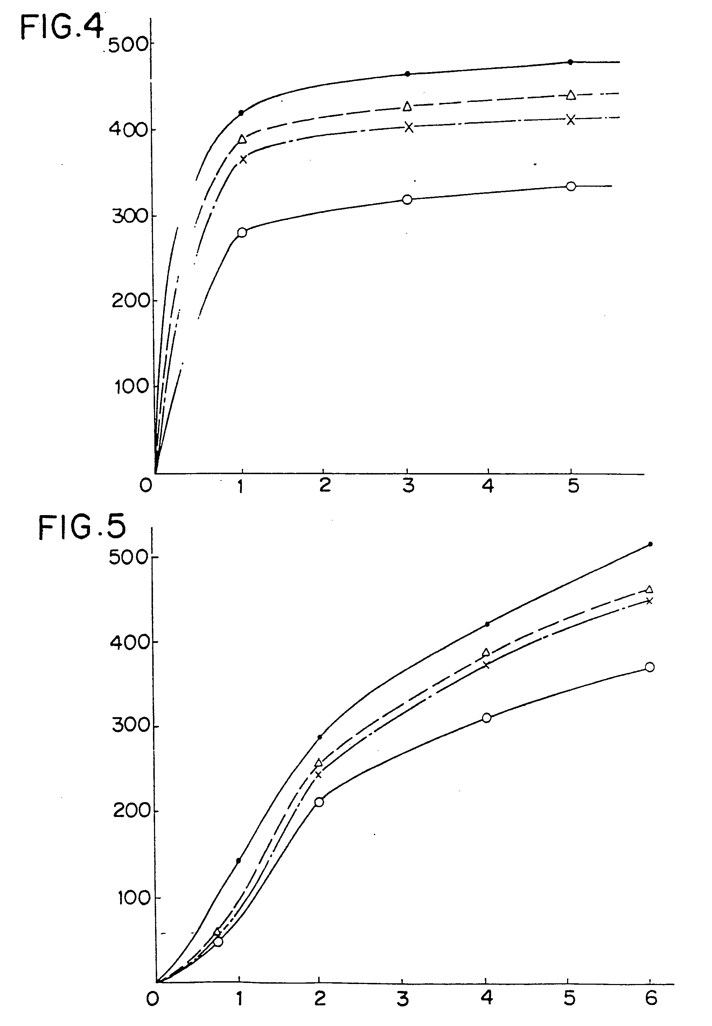

As will be mentioned in Example 2, Figure 4 and Figure 5 are similar figures showing the relationships between the age (day) (the lateral axes) and the expansive stress (kg/cm²) (longitudinal axes) at the middle part of the measuring pipe, in the case that various water reduction agents are added to the demolition agent. Figure 4 is for the case that the temperature is 20°C and Figure 5 is for the case that the room temperature is 5°C.

In Figure 4 and Figure 5,

—●— denotes the case wherein 1.5% of "Hi-fluid" was added to a demolition agent of this invention; water ratio=30%,

—△— denotes the case wherein 1% of "Hi-fluid" was added to the demolition agent of this invention; water ratio=33%,

—x— denotes the case wherein 1% of "Melment" (trade mark) was added to the demolition agent of this invention; water ratio=35%,

—o— denotes the demolition agent of this invention; water ratio=40%.

Example 1

A mixture of 84 parts by weight of a calcareous material (CaO 55.3%), 9 parts by weight of siliceous material ($SiO_2$ 63.0%) and 7 parts by weight of gypsum ($SO_3$ 47.2%) was pulverized to the extent that the residue on a sieve of 88-$\mu$m mesh accounted for 1.5%, then granulated and thereafter roasted at the temperature of 1350°C. The material thus obtained had the following composition: about 42% of $3CaO.SiO_2$ crystals, about 45% of CaO crystalline particles, about 9% of $CaSO_4$ and about 4% of impurities ($3CaO.Al_2O_3$, $4CaO.Al_2O_3$, $Fe_2O_3$ etc), wherein about 58% of the CaO crystalline particles were included in large $3CaO.SiO_2$ crystals which had grown. The material was pulverized to a specific surface area of 2200 cm²/g (Blaine), and was used as a demolition agent.

A slurry prepared by adding 0.35 parts by weight of water to 1 part of the demolition agent and mixing them, was filled into a steel pipe as shown in Figure 1 and hydrated at room temperature. Its expansive stress was measured to obtain the results shown in Figure 2 (the relationship of the expansive stress at one day) and in Figure 3 (the changes of expansive stress depending on the age at the middle part of the pipe). For comparison, in Figure 2 and Figure 3, the results which were obtained by using "Denka CSA", a cement expansive agent made by Denki Kagaku Kogyo Kabushiki Kaisha, in place of the above mentioned demolition and hydrating it under the same conditions as those described above, are also shown together.

Example 2

A mixture of 85 parts by weight of a calcareous material (CaO 55.3%), 7 parts by weight of a siliceous material ($SiO_2$ 63.0%) and 8 parts by weight of gypsum ($SO_3$ 47.2%) was calcined at the temperature of 1530°C as in Example 1. The material thus obtained had the following composition: about 33% of $3CaO.SiO_2$ crystals, about 50% of CaO crystalline particles, about 10% of $CaSO_4$ and about 5% of impurities ($3CaO.Al_2O_3$, $4CaO.Al_2O_3$, $Fe_2O_3$ etc), about 63% of said CaO crystalline particles with a particle diameter distribution of 5 to 30 $\mu$m being included in large $3CaO.SiO_2$ crystals which had grown up. The material was pulverized to a specific surface area of 3340 cm²/g (Blaine), and was used as a demolition agent with or without "Hi-fluid" (made by Takemoto Oil and Fat Company Limited; its main component being a high condensate type of alkylarylsulphonate) or "Melment" (made by Showa Denko Kabushiki Kaisha; its main component being a water-soluble melamine resin type) as a water reduction agent. Slurries prepared by mixing 1 part by weight of demolition agent with various amounts of water, were filled into a steel pipe as used in Example 1. They were then allowed to hydrate at 20°C and 5°C to obtain the changes of the expansive stress at the middle part of the pipe, which were as shown in Figure 4 and Figure 5.

From the above mentioned tests, the demolition agents according to the invention were found to generate high expansive stress. Therefore, by using the demolition agent according to the invention, it is possible easily to break rocks and concrete having high fracture strength.

Example 3

A hole with diameter of 3.5 cm and depth of 60 cm was drilled at the middle part of a 1m³ non-reinforced concrete block having the following mechanical properties: 300 kg/cm² compressive strength, 28 kg/cm² tensile strength and $2.7 \times 10^5$ kg/cm² Young's modulus. A slurry obtained by mixing 1 part by weight of the demolition agent of Example 1 and 0.35 parts by weight of water, was filled in the hole, and allowed to stand at the atmospheric temperature of 21°C. Then three cracks were found after 6 hours, leading from the position of the hole, and the concrete split into three small blocks after 20 hours.

Example 4

Four filling holes with diameter of 3.5 cm and depth of 100 cm were drilled at intervals of 70 cm in a 1.8 m by 2.0 m by 1.5 m limestone boulder. The demolition agent was a mixture of the material prepared in Example 2 but ground to a specific surface area of 3480 cm²/g (Blaine), together with 1% by weight of "Melment" powders. Slurry obtained by mixing 1 part by weight of the demolition agent and 0.35 parts by weight of water, was filled into the holes and allowed to stand at the atmospheric temperature of 15°C. After 30 hours, cracks occurred and after 4 days the boulder was split into seven small blocks.

## Claims

1. A demolition agent which acts by means of expansive stress generated upon hydration of quick-lime, characterized in that it is a comminuted calcined material which comprises 24 to 65% by weight of $3CaO.SiO_2$ crystals, 30 to 60% by weight of CaO crystalline particles and 5 to 17% by weight of $CaSO_4$, more than 50% by weight of said CaO crystalline particles being included in the $3CaO.SiO_2$ crystals.

2. A demolition agent according to claim 1, wherein the calcined material comprises 35 to 42% by weight of $3CaO.SiO_2$ crystals, 45 to 50% by weight of CaO crystalline particles and 9 to 10% by weight of $CaSO_4$, 58 to 63% by weight of said CaO crystalline particles being included in the $3CaO.SiO_2$ crystals.

3. A demolition agent according to claim 1 or 2, wherein the specific surface area (Blaine) of the comminuted material is 1500 to 4000 cm²/g.

4. A demolition agent according to any of claims 1 to 3, which contains 0.5 to 2% by weight of a water reduction agent.

5. A demolition agent according to claim 4, wherein the water reduction agent comprises at least one agent which is of the lignin type, a sulphonate of a higher alcohol, an oxyorganic acid type, an alkylarylsulphonate or a high condensate thereof, a polyoxyethylene alkylether, a polyol composite type, a water-soluble melamine resin type, or a beta-naphthalene sulphonic acid-formal in condensate type.

6. A demolition agent according to claim 5, wherein the water reduction agent is an alkylarylsulphonate or a water-soluble melamine resin.

7. A method of making a demolition agent which comprises roasting under an oxidizing atmosphere at 1350 to 1550°C a mixture of calcareous material, siliceous material and gypsum in the molar ratio for $CaO/SiO_2$ of 5.0 to 14.4 and for $CaSO_4/SiO_2$ of 0.13 to 1.19.

8. A method of demolition of an object in which one or more holes are bored in the object and the holes are filled with an aqueous slurry of a demolition agent which acts by generating expansive stress upon hydration, characterized in that the demolition agent is a demolition agent as defined in claim 1 or as made by a method defined in claim 7.

9. A method according to claim 8, in which the slurry contains a water reduction agent.

## Revendications

1. Agent de démolition qui exerce son action par l'intermédiaire d'un effort ou tension d'expansion engendré après hydration à la façon de la chaux vive, caractérisé par le fait qu'il est constitué par une substance calcinée réduite en particules fines, qui comprend 24 à 65% en poids de cristaux de $3CaO.SiO_2$, 30 à 60% en poids de particules cristallines de CaO et 5 à 17% en poids de $CaSO_4$, plus de 50% en poids desdites particules cristallines de CaO étant renfermées dans les cristaux de $3CaO.SiO_2$.

2. Agent de démolition selon la revendication 1, caractérisé par le fait que la substance calcinée comprend 35 à 42% en poids de cristaux de $3CaO.SiO_2$, 45 à 50% en poids de particules cristallines de CaO et 9 à 10% en poids de $CaSO_4$, 58 à 63% en poids desdites particules cristallines de CaO étant renfermées dans les cristaux de $3CaO.SiO_2$.

3. Agent de démolition selon la revendication 1 ou 2, caractérisé par le fait que la surface spécifique (mesurée par la méthode de Blaine) de la substance en particules fines est de 1500 à 4000 cm²/g.

4. Agent de démolition selon l'une quelconque des revendications 1 à 3, caractérisé par le fait qu'il contient 0,5 à 2% en poids d'un agent de réduction de la quantité d'eau.

5. Agent de démolition selon la revendication 4, caractérisé par le fait que l'agent de réduction de la quantité d'eau comprend au moins un agent qui est du type lignine, un sulfonate d'un alcool à poids moléculaire élevé, du type d'un acide organique hydroxylé, un alkylarylsulfonate ou un produit de condensation à poids moléculaire élevé de celui-ci, un polyoxyéthylène alkyléther, un polyol de type composite, une résine du type mélamine soluble dans l'eau, ou on produit de condensation du type acide $\beta$-naphthalène sulfonique-formaline.

6. Agent de démolition selon la revendication 5, caractérisé par le fait que l'agent de réduction de la quantité d'eau est un alkylarylsulfonate ou une résine de mélamine soluble dans l'eau.

7. Procédé pour préparer un agent de démolition, caractérisé par le fait qu'il consiste à soumettre à un grillage dans une atmosphère oxydante à 1350°C à 1550°C un mélange d'un matériau calcaire, un matériau siliceux et du gypse dans le rapport molaire, pour $CaO/SiO_2$ de 5,0 à 14,4, et pour $CaSO_4/SiO_2$ de 0,13 à 1,19.

8. Procédé de démolition d'un objet dans lequel un ou plusieurs trous ou creusements sont percés dans l'objet et les trous sont remplis d'une suspension aqueuse d'un agent de démolition qui agit en produisant une tension d'expansion par suite de son hydratation, caractérisé par le fait que l'agent de démolition est un agent tel que défini dans la revendication 1 ou tel que préparé par le procédé selon la revendication 7.

9. Procédé selon la revendication 8, caractérisé par le fait que la suspension contient un agent de réduction de la quantité d'eau.

**Patentansprüche**

1. Abbruchmittel, welches mittels durch Hydratation von gebranntem Kalk erzeugter Expansivkraft wirkt, dadurch gekennzeichnet, dass es ein zerkleinertes kalziniertes Material ist, welches 24 bis 65 Gew.-% 3 $CaO.SiO_2$-Kristalle, 30 bis 60 Gew.-% kristalline CaO-Partikel und mehr als 5 bis 17 Gew.-% $CaSO_4$ enthält, wobei mehr als 50 Gew.-% der kristallinen CaO-Partikel in den 3 $CaO.SiO_2$-Kristallen eingeschlossen sind.

2. Abbruchmittel nach Anspruch 1, dadurch gekennzeichnet, dass das kalzinierte Material 35 bis 42 Gew.-% 3$CaO.SiO_2$-Kristalle, 45 bis 50 Gew.-% kristalline CaO-Partikel und 9 bis 10 Gew.-% $CaSO_4$ enthält, wobei 58 bis 63 Gew.-% der kristallinen CaO-Partikel in den 3 $CaO.SiO_2$-Kristallen eingeschlossen sind.

3. Abbruchmittel nach Anspruch 1 oder 2, dadurch gekennzeichnet, dass der spezifische Oberflächeninhalt (Blaine) des zerkleinerten Materials 1500 bis 4000 $cm^2/g$ beträgt.

4. Abbruchmittel nach einem der Ansprüche 1 bis 3, dadurch gekennzeichnet, dass es 0,5 bis 2 Gew.-% eines Wasserreduktionsmittels enthält.

5. Abbruchmittel nach Anspruch 4, dadurch gekennzeichnet, dass das Wasserreduktionsmittel mindestens ein Mittel des Lignintypes, ein Sulfonat eines höheren Alkohols, eines oxiorganischen Säuretypes, ein Alkylarylsulfonat oder ein hohes Kondensat davon, ein Polyoxyäthylenalkyläther, ein Polyolgemischtyp, eines wasserlöslichen Melaminharz-Types, oder eines Beta-Naphtalin-Sulfosäureformaldehydkondensat-Types enthält.

6. Abbruchmittel nach Anspruch 5, dadurch gekennzeichnet, dass das Wasserreduktionsmittel ein Alkylarylsulfonat oder ein wasserlösliches Melaminharz ist.

7. Verfahren zur Herstellung eines Abbruchmittels dadurch gekennzeichnet, dass man in einer oxidierenden Atmosphäre bei 1350 bis 1550°C ein Gemisch aus kalkhaltigem Material, kieselsäurehaltigem Material und Gips im molaren Verhältnis von 5,0 bis 14,4 für $CaO/SiO_2$ und von 0,13 bis 1,19 für $CaSO_4/SiO_2$ röstet.

8. Verfahren zum Abbruch eines Gegenstandes, bei welchem ein oder mehrere Löcher in diesen Gegenstand gebohrt und diese Löcher mit einem flüssigen Brei eines durch Hydration Expansivkräfte entwickelnden Abbruchmittels gefüllt werden, dadurch gekennzeichnet, dass das Abbruchmittel ein Abbruchmittel nach Anspruch 1 oder hergestellt nach einem Verfahren gemäss Anspruch 7 ist.

9. Verfahren nach Anspruch 8, dadurch gekennzeichnet, dass der flüssige Brei ein Wasserreduktionsmittel enthält.

FIG. 1

FIG. 2

FIG.3

1

FIG.4

FIG.5